# EUROPEAN PATENT APPLICATION

(11) **EP 4 174 652 A1**
(43) Date of publication of application: **03.05.2023**
(21) Application number: 21204922.5
(22) Date of filing: 27.10.2021
(51) Int. Cl.: G06F 9/50, G05B 19/00

(54) **AN EDGE-CLOUD SOFT CONTROLLER FOR AN INDUSTRIAL CONTROL APPLICATION**

(71) Applicant: ABB SCHWEIZ AG, 5400 Baden (CH)
(72) Inventor: PANG, Zhibo, 722 40 Västerås (SE); WIATR, Pawel, 194 78 Upplands Väsby (SE); DOBRIJEVIC, Ognjen, 723 40 Västerås (SE)
(74) Representative: Kransell & Wennborg KB

(57) **Abstract**

A control network (100) for supporting multiple industrial automation devices (190), the control network comprising: a first virtual processing resource (120) and a second virtual processing resource (130), each configured to execute a real-time software application (171, ..., 177); a hypervisor (150) configured to facilitate data exchange among the executing software applications; and a network interface (151, 161) configured to communicate with said automation devices over wireless network links (182), wherein a real-time performance criterion applies to the first virtual processing resource but not to the second virtual processing resource.

## Description

### TECHNICAL FIELD

The present disclosure relates to the field of system automation. In particular, it presents a control network for supporting multiple wireless automation devices, which actively manages the usage of real-time processing resources with different performance ratings.

### BACKGROUND

In the automation industry, a tendency towards softwarization of the central controller in an automation system, into a so-called soft controller, can be observed. The fast progress in wireless communications and edge-cloud computing infrastructures have made the deployment of the soft central controller on an edge computing platform over various wireless networks a realistic option in the near future. Platforms such as mobile edge computing and multi-access edge computing are being considered, along with 3GPP NR ("5G") and advanced Wi-Fi^{™} networks. However, simply deploying the time-critical soft controller applications in the same way as other, non-time-critical automation applications are deployed cannot guarantee that the stringent ― and ultimately safety-related ― requirements of latency and communication service availability are met. Even assuming this problem will fade gradually over time as faster processing resources become available, it will remain a delicate task to orchestrate processing resources for a mixture of time-critical soft controller applications and non-time-critical applications on the same platform, especially to do so in an economically competitive fashion.

In CN112181382 and CN112578755, the proposals are made that real-time and non-real-time applications are to be separated and deployed on different processing resources. The two disclosures do not address the problem of catering to heterogeneous needs of different real-time applications. Besides, neither CN112181382 nor CN112578755 is concerned with wireless control. A wireless link is vulnerable and may take time to reestablish in the event of a breakdown. Even in normal operation, the wireless link has an inherent latency. Both these factors tend to increase the complexity of the industrial control task: if a precautionary safety margin for the wireless communication is introduced, then the critical deadlines to be met by the executing control applications are shortened proportionately.

Accordingly, it is an open problem in automation to realize the time-critical soft controller applications on a wireless-based edge computing platform which these applications share with non-time-critical automation applications.

### SUMMARY

One objective of the present disclosure is to make available a control network with an improved ability to execute real-time applications with different degrees of criticality, including hard real-time and soft real-time software applications. A further objective is to propose virtual processing resources and resource allocation rules to be used with such a control network. A still further objective is to propose a method of operating a soft industrial controller in edge-cloud computing hardware. It is particularly desirable to satisfy these objectives in a cost-efficient way.

At least some of the mentioned objectives are achieved by the present invention as defined by the independent claims. The dependent claims relate to advantageous embodiments of the invention.

In a first aspect of the invention, there is provided a control network for supporting multiple industrial automation devices. The control network comprises: a first virtual processing resource and a second virtual processing resource, each configured to execute a real-time software application; a hypervisor configured to facilitate data exchange among the executing software applications; and a network interface configured to communicate with said automation devices over wireless network links. According to the first aspect, a real-time performance criterion applies to the first virtual processing resource but not to the second virtual processing resource.

Because the control network according to the first aspect segregates the virtual processing resources in accordance with a real-time performance criterion, it becomes possible to systematize the allocation of suitable resources to each real-time software application on a need basis, so that the resource usage at runtime can be made more efficient. More precisely, it is prudent to reserve the first virtual processing resource, which is likely the most versatile and/or costliest one, for mission-critical software applications, such as controller core applications. It is understood that each of the first and second virtual processing resources may be capable of executing generic software applications, to which no real-time constraints apply. Similarly, the first virtual processing resources could occasionally take on a soft real-time application although this may not be preferred from a strict economic point of view.

In some embodiments of the invention, the first virtual processing resource shall be suitable for executing a hard real-time software application. In the present disclosure, a real-time software application is categorized as "hard" when the non-observance of a deadline results in a total execution failure. A total execution failure usually means that the execution cannot be resumed from the point of failure, but the software application may need to be re-initialized. A total execution failure of a soft controller will usually have an at least temporary negative direct or indirect effect on the productivity of the automation devices that the soft controller supports.

In some embodiments, the control network further comprises an edge-cloud manager which acts as a processing resource coordinator. The edge-cloud manager may have the power to allocate processing resources to a real-time software application to be launched. Specifically, the edge-cloud manager may be configured to allocate the first virtual processing resource for executing a controller core application, a network gateway, an Industrial Ethernet Master and/or an Industrial-Ethernet-to-wireless gateway, and to allocate the second virtual processing resource for executing operator station backend software, engineering station backend software, human-machine interface backend software and/or analytics software.

In a second aspect of the invention, there is provided a method of operating a soft industrial controller in edge-cloud computing hardware, wherein the soft industrial controller is configured to support multiple industrial automation devices. The method comprises: deploying a first virtual processing resource in the edge-cloud computing hardware; deploying a second virtual processing resource in the edge-cloud computing hardware, wherein the first but not the second virtual processing resource satisfies a real-time performance criterion; initiating execution of a controller core application of the industrial controller on the first virtual processing resource; initiating execution of an operator interface application on the second virtual processing resource; facilitating data exchange among the executing software applications by means of a hypervisor; and facilitating data exchange between the executing software applications and the automation devices by means of wireless network links.

The second aspect achieves a softwarization of an industrial controller, which may in particular act as a central controller in an automation system. Analogous to the first aspect of the invention, a segregation of the virtual processing resources in accordance with the real-time performance criterion is provided, which facilitates a more systematic allocation of suitable resources to each real-time software application. As described for the first aspect, a variety of different embodiments are possible within the second aspect.

The invention further relates to a computer program containing instructions for causing a computer to carry out the above method. The computer program may be stored or distributed on a data carrier. As used herein, a "data carrier" may be a transitory data carrier, such as modulated electromagnetic or optical waves, or a non-transitory data carrier. Non-transitory data carriers include volatile and non-volatile memories, such as permanent and non-permanent storage media of magnetic, optical or solid-state type. Still within the scope of "data carrier", such memories may be fixedly mounted or portable.

For purposes of the present disclosure, a "real-time software application" is an application adapted for execution on a real-time computing system. For example, there may be an explicit or implicit deadline (or real-time constraint) between events in the application. In some applications the observance of the deadline may just add value (e.g., improved usefulness or higher perceived quality of service), while in other it may be critical, particularly, mission-critical or system-critical. In the present disclosure, furthermore, the modifier "edge-cloud" shall mean edge or cloud, or both, unless specified otherwise.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order described, unless explicitly stated.

### BRIEF DESCRIPTION OF THE DRAWINGS

Aspects and embodiments are now described, by way of example, with reference to the accompanying drawings, on which:
figure 1 shows, in block-diagram form, a control network and associated automation devices, according to an embodiment of the invention; and
figure 2 is a flowchart of a method for operating a soft industrial controller in edge-cloud computing hardware, according to an embodiment of the invention.

### DETAILED DESCRIPTION

The aspects of the present disclosure will now be described more fully hereinafter with reference to the accompanying drawings, on which certain embodiments of the invention are shown. These aspects may, however, be embodied in many different forms and should not be construed as limiting; rather, these embodiments are provided by way of example so that this disclosure will be thorough and complete, and to fully convey the scope of all aspects of the invention to those skilled in the art. Like numbers refer to like elements throughout the description.

As explained, it is challenging to realize a time-critical soft controller over a wireless-based edge computing platform if the stringent performance requirements are to be met, especially when the time-critical applications are mixed with less time-critical (or not at all time-critical) automation applications on the same platform. This present invention proposes a novel solution, allowing the deployment of hard real-time applications, such as the controller core and Master function for an Industrial Ethernet protocol over hard-real-time virtualization (e.g., hardware accelerated hypervisor and virtual machine of real-time operating system, RTOS) alongside the deployment of soft real-time applications, such as monitoring and supervisory functionalities over ordinary virtualization (e.g., containers). Moreover, as will be described in detail below, hard real-time communication between a hypervised soft controller core and the automation devices may be realized by tightly integrating them over a virtual Ethernet switch and wireless networks.

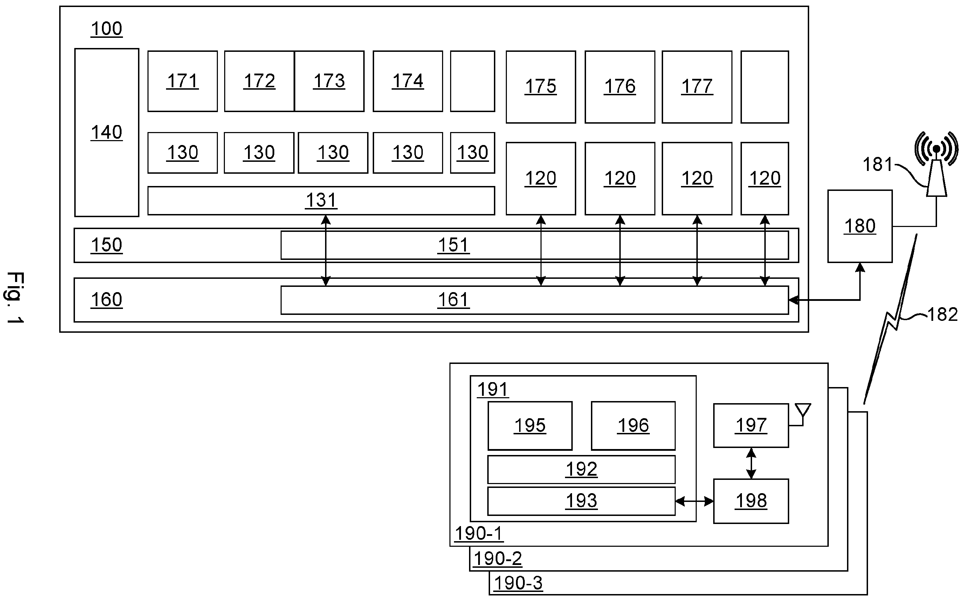

Figure 1 shows, in block-diagram form, the proposed automation system architecture based on edge-cloud computing over a 3GPP NR ("5G") network. The architecture comprises a control network (or edge-cloud soft controller) 100, as well as multiple wireless automation devices 190. Example automation devices 190 include: a programmable logic controller (PLC), an input/output module, a motor, a drive, a sensor, an actuator, a mobile robot.

The control network 100 is implemented on top of edge-cloud computing hardware 160 and includes virtual machines 120, container engines 130, an edge-cloud manager 140 and a hypervisor 150. The hardware 160 may be sourced from various commercial suppliers, under brands such as Microsoft Azure, Amazon AWS, Alibaba Cloud and Huawei Cloud. In such an implementation, however, stringent timing requirements of the relatively more time-critical applications have to be met, including the execution of the control software programmed using IEC-61131-3 or IEC61499, but also other, less time-critical applications may contain diverse timing requirements. This applies in particular to software applications providing the backend or frontend of a human-machine interface (HMI). To manage these diverse requirements, the automation applications are classified into two types, namely, hard real-time applications and soft real-time applications.

The soft real-time applications may include: a backbone application for remote analytics 171, an operator station backend application 172, an engineering station backend application 173, and a soft HMI backend application 174. These are executed on top of respective ones of the container engines 130, which virtualize and unite the functionalities of the corresponding operating systems, which may be Linux and Microsoft Windows. The container engines 130 can be based on, e.g., Docker, which some regard as a *de facto* standard for containerization. The container engines 130 are overseen by a container manager 131, which is provided by the infrastructure of the underlying edge-cloud computing hardware 160, such as Azure Kubernetes Service for the Microsoft Azure edge-cloud computing infrastructure.

The hard real-time applications, for their part, may include: a soft controller core 175, a soft Industrial Ethernet Master 176, and an Industrial Ethernet to Wireless (IE-to-Wireless) gateway 177. These applications are implemented over dedicated ones of the virtual machines 120 provided by respective real-time operation systems (RTOSs). The hard real-time applications are therefore executed separate from, and by different means than, less time-critical applications, including the soft real-time applications. Each of the RTOSs can be VxWorks, RTLinux, Windows CE, FreeRTOS, QNX Neutrino, µC/OS, µC/OS-II, µC/OS-III, etc.

The soft controller core 175 realizes the functionalities of a central processing unit of a conventional hardware PLC. These functionalities may include: periodically scanning input and output devices among the automation devices 190, and executing control algorithms, which may be programmed as Ladder Logic scripts, Functional Block scripts and/or IEC-61131-3 scripts.

The soft Industrial Ethernet Master 176 realizes the functionalities of a Master of an Industrial Ethernet network, and it may thus fulfil roles similar to the communication modules in a conventional hardware PLC.

The IE-to-Wireless gateway 177, finally, bridges the Industrial Ethernet protocols, such as PROFINET, EtherNet/IP, EtherCAT, time-sensitive networking (TSN), Modbus TCP, CANopen, and Data Distribution Service (DDS), on the one hand and the 5G network on the other hand. Depending on the Industrial Ethernet (IE) protocols in use, the IE-to-Wireless Gateway 177 may realize protocol translation, Internet Protocol (IP) tunneling, topology mapping (e.g., from multicast to unicast and vice versa), Quality of Service (QoS) mapping, network redundancy, etc.

Preferably, each pair of the hard real-time application 175, 176, 177 and its associated RTOS virtual machine 120 may be allocated on a dedicated core of a central processing unit (CPU) of the edge-cloud computing hardware 160. Dedicated physical memory blocks may be used as well.

Accordingly, the control network 100 includes a first and a second virtual processing resource, such that the ability to execute real-time applications of the first virtual processing resource (here, virtual machines 120) is superior to that of the second virtual processing resource (here, container engines 130). Concretely, a real-time performance criterion applies to the first virtual processing resources but not to the second virtual processing resource. More precisely, the first virtual processing resource may have undergone a theoretical or empirical verification that it satisfies said real-time performance criterion. The second virtual processing resource has not necessarily undergone a verification of this kind. In some embodiments, the first virtual processing resource should be suitable for executing a hard real-time software application in the sense previously defined. In other embodiments, where the first virtual processing resource is embodied as a virtual machine, it is running an operating system adapted for hard real-time software applications, such as an RTOS. In sum, embodiments of invention recognize any of these segregations of the processing resources into two or more groups and relies upon it systematically for the allocation of processing resources.

The performance criterion may be one or more of the following: a maximum probability of failure per unit time, a minimum time between failures, a minimum breakdown utilization (BU), a maximum mean response time, a maximum normalized mean response time (NMRT), a maximum standard deviation of response time, a minimum standard deviation of response time, a minimum guaranteed ratio (GR). These figures-of-merit have well-known definitions and are widely used in the technical field. For example, the BU may be defined as the degree of resource utilization at or below which the resource shall guarantee that all deadlines will be met. The NMRT may be defined as the ratio between the time interval in which a task becomes ready for execution and terminates, and the actual CPU time consumed for the execution of that task. The GR, with particular relevance for dynamic algorithms, may be defined as the number of tasks whose execution can be guaranteed versus the total number of tasks that request execution. For additional context and discussions, reference is made to F. Panzieri and R. Davoli, "Real Time Systems: A Tutorial", in: Donatiello & Nelson (eds.), Performance Evaluation of Computer and Communication Systems. Joint Tutorial Papers of Performance '93 and Sigmetrics '93, Springer, 1993 and references therein.

The edge-cloud manager 140 may act as a processing resource coordinator. The edge-cloud manager may allocate suitable processing resources to a real-time software application to be launched. In some embodiments, the edge-cloud manager 140 maybe configured to allocate the first virtual processing resource 120 for executing a controller core application 175, a network gateway, an Industrial Ethernet Master 176 and/or an Industrial-Ethernet-to-Wireless gateway 177. Additionally or alternatively, the edge-cloud manager 140 may be configured to allocate the second virtual processing resource 130 for executing operator station backend software 172, engineering station backend software 173, HMI backend software 174 and/or analytics software 171.

Generally, the hypervisor 150 is configured to facilitate data exchange among the executing software applications. The hypervisor may further be configured to facilitate the data exchange between the software applications and the automation devices 190. The hypervisor 150 may be implemented as a bare-metal hypervisor, or type-i hypervisor. In some embodiments, the hypervisor 150 is hardware-accelerated, e.g., by including a hardware accelerator.

To realize the functionalities of the backplane of a conventional hardware PLC, a virtual Ethernet switch 151 is implemented in the hypervisor 150. The virtual Ethernet switch 151 is further supported by the virtual Ethernet bridge hardware 161, which is integrated in the edge-cloud computing hardware 160. Functionally, the virtual Ethernet switch 151 and the virtual Ethernet bridge hardware 161 can be considered to constitute a network interface. Such virtual Ethernet bridge hardware may for example be sourced from Intel Corporation. Virtual Ethernet endpoints may be used to facilitate the time-critical data exchange among the more time-critical applications (e.g., hard real-time software applications) on the one hand, and/or between the less time-critical applications (e.g., soft real-time software applications) and said more time-critical applications on the other hand. In one embodiment, the virtual Ethernet switch 151 and the virtual Ethernet bridge hardware 161 are implemented using the single-root input/output virtualization (SR-IOV), or the Data Plane Development Kit (DPDK).

The time-critical data exchange between the control network (edge-cloud soft controller) 100 and the wireless automation devices 190 proceeds over a wireless network link 182 maintained by a transceiver 181 of a wireless base station 180, to which the control network 100 is connected, and a wireless network interface 197 arranged in the automation device 190. In some embodiments, the wireless network is based on 3GPP 5G, 3GPP LTE or advanced Wi-Fi^{™}. If 5G is applied, the wireless base station 180 acts as a gNodeB (gNB), and the control network 100 is connected to the gNB though a user-plane function (UPF) of the 5G system. If instead Wi-Fi^{™} is utilized, the wireless base station 180 is a Wi-Fi^{™} access point.

On an architectural level, the wireless automation device 190 may be described as a combination of a conventional automation device 191 and said wireless network interface 197. If a non-IP wireless network is used (e.g., some Release-15 implementations of 5G), the automation device 190 further includes a Wireless-to-Industrial-Ethernet gateway 198. The Wireless-to-IE gateway 198, just like the IE-to-Wireless gateway 177 in the control network 100, maybe omitted if the wireless network supports IP-based communication. In embodiments where 5G is applied as the communication technology, the wireless network interface 197 acts as a 5G user equipment (UE). If instead Wi-Fi^{™} is applied, the wireless network interface 197 is a Wi-Fi^{™} mobile station. This architecture may limit or minimize the necessary modifications to legacy automation hardware and software.

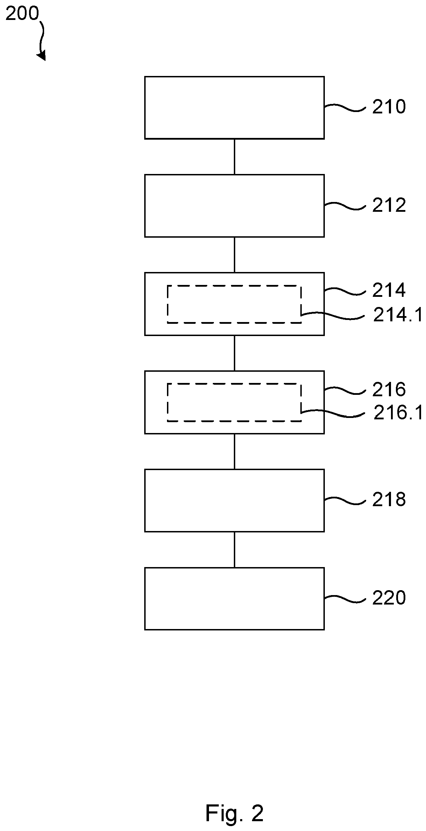

Figure 2 is a flowchart of a method 200 of operating a soft industrial controller in edge-cloud computing hardware 160 of the generic type described above. The method 200 provides a soft industrial controller which is configured to support multiple industrial automation devices 190. The method 200 may be implemented in an automated fashion, that is, as a script to be executed by a processor within the edge-cloud computing hardware 160 or external to this. Alternatively, the method 200 may be performed in a semi-automated manner, e.g., by an operator or system administrator who is configuring the edge-cloud computing hardware 160 in view of an intended industrial use case.

In a first step 210 of the method 200, a first virtual processing resource 120 is deployed in the edge-cloud computing hardware 160.

In a second step 212, a second virtual processing resource 130 is deployed in the edge-cloud computing hardware 160. The first but not the second virtual processing resource satisfies a real-time performance criterion. Example real-time performance criteria have been reviewed above. For example, the first virtual processing resource 120 maybe suitable for executing a hard real-time software application.

In third and fourth steps 214, 216 of the method 200, execution of a controller core application 175 of the industrial controller is initiated on the first virtual processing resource 120, and execution of an operator interface application 172, 173, 174 is initiated on the second virtual processing resource 130. Optionally, execution of one or more hard real-time software applications, such as network gateway applications 176, 177, is initiated 214.1 on the first virtual processing resource 120. Further optionally, execution of a soft real-time software application, such as analytics software 171, is initiated 216.1 on the second virtual processing resource 130.

In a fifth step 218 of the method 200, a data exchange among the executing software applications 172, 173, 174, 175 is facilitated by means of a hypervisor 150.

In a sixth step 220 of the method 200, finally, a data exchange between the executing software applications 172, 173, 174, 175 and the automation devices 190 is facilitated by means of wireless network links 182.

Summing up, the segregation of real-time processing resources into two groups is an overarching idea that has been formulated and exemplified in the present disclosure. A further realization underlying the present invention is to allocate these processing resources in view of the relative time criticality of various software applications which are to be executed. These ideas may allow an increased utilization of consumer-grade infrastructure rather than specialized infrastructure, which may result in a lower total cost of orchestrating the processing resources required by a soft industrial controller. Further novel aspects of the present invention relate to the virtualization solution that enables data exchange between the time-critical applications at adequate speed; this is made possible by means of widely available hardware and standard software building blocks, that is, without a compelling need to resort to costly specialized solutions.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims.

## Claims

1. A control network (100) for supporting multiple industrial automation devices (190), the control network comprising:
a first virtual processing resource (120) and a second virtual processing resource (130), each configured to execute a real-time software application (171, ..., 177);
a hypervisor (150) configured to facilitate data exchange among the executing software applications; and
a network interface (151, 161) configured to communicate with said automation devices over wireless network links (182),
wherein a real-time performance criterion applies to the first virtual processing resource but not to the second virtual processing resource.

2. The control network (100) of claim 1, wherein the performance criterion is one or more of the following:
a maximum probability of failure per unit time,
a minimum time between failures,
a minimum breakdown utilization,
a maximum mean response time,
a maximum normalized mean response time,
a maximum standard deviation of response time,
a minimum standard deviation of response time,
a minimum guaranteed ratio.

3. The control network (100) of claim 1 or 2, wherein the first virtual processing resource (120) is suitable for executing a hard real-time software application.

4. The control network (100) of any of the preceding claims, wherein the first virtual processing resource (120) comprises a virtual machine with an operating system adapted for hard real-time software applications.

5. The control network (100) of claim 4, wherein the first virtual processing resource (120) comprises multiple virtual machines deployed on different hardware cores and/or different memory blocks.

6. The control network (100) of any of the preceding claims, further comprising:
an edge-cloud manager (140) configured to allocate the first virtual processing resource (120) for executing one or more of the following software applications:
a controller core application,
a network gateway,
an Industrial Ethernet Master,
an Industrial-Ethernet-to-Wireless gateway.

7. The control network (100) of any of the preceding claims, wherein the second virtual processing resource (130) comprises a container engine.

8. The control network (100) of any of the preceding claims, further comprising:
an edge-cloud manager (140) configured to allocate the second virtual processing resource (130) for executing one or more of the following software applications:
operator station backend software,
engineering station backend software,
human-machine interface backend software,
analytics software.

9. The control network (100) of any of the preceding claims, wherein the hypervisor (150) is hardware-accelerated.

10. The control network (100) of any of the preceding claims, wherein the hypervisor (150) is a type-1 hypervisor.

11. The control network (100) of any of the preceding claims, wherein the virtual processing resources (120, 130) are deployed in edge-cloud computing hardware (160).

12. The control network (100), wherein the automation devices (190) supported by the control network include at least one of: a programmable logic controller, an input/output module, a motor, a drive, a sensor, an actuator, a mobile robot.

13. A method (200) of operating a soft industrial controller in edge-cloud computing hardware (160), wherein the soft industrial controller is configured to support multiple industrial automation devices (190), the method comprising:
deploying (210) a first virtual processing resource (120) in the edge-cloud computing hardware;
deploying (212) a second virtual processing resource (130) in the edge-cloud computing hardware, wherein the first but not the second virtual processing resource satisfies a real-time performance criterion;
initiating (214) execution of a controller core application (175) of the industrial controller on the first virtual processing resource;
initiating (216) execution of an operator interface application (172, 173, 174) on the second virtual processing resource;
facilitating (218) data exchange among the executing software applications by means of a hypervisor (150); and
facilitating (220) data exchange between the executing software applications and the automation devices by means of wireless network links (182).

14. The method of claim 13, further comprising:
initiating (214.1) execution of a hard real-time software application on the first virtual processing resource (120), such as a network gateway (176, 177).

15. The method of claim 13 or 14, further comprising:
initiating (216.1) execution of a soft real-time software application on the second virtual processing resource (130), such as analytics software (171).
